# EUROPEAN PATENT APPLICATION

(11) **EP 4 309 550 A1**
(43) Date of publication of application: **24.01.2024**
(21) Application number: 22185358.3
(22) Date of filing: 18.07.2022
(51) Int. Cl.: A47J 37/06

(54) **AIR FRYER COMPRISING A CAMERA ASSEMBLY**

(71) Applicant: Versuni Holding B.V., 5656 AE Eindhoven (NL)
(72) Inventor: MIKULA, Christian, 5656 AE Eindhoven (NL); KAUER, Gerald, 5656 AE Eindhoven (NL); HAEFELE, Peter, 5656 AE Eindhoven (NL)
(74) Representative: Vollering, Stefanus Franciscus Maria

(57) **Abstract**

Provided is an air fryer (100) comprising a cooking chamber (102), a heating element (104), and a circulation system (106, 108) arranged to circulate gas heated by the heating element in the cooking chamber. The air fryer further comprises a camera assembly (134) comprising an image sensor (138) for imaging inside the cooking chamber through a window (132) between the inside of the cooking chamber and the image sensor. The camera assembly has a field of view that enables imaging inside the cooking chamber. The heating element is arranged outside said field of view. Alternatively or additionally, the window can be arranged so as to avoid infrared radiation emitted by the heating element being directly incident on the window.

## Description

### FIELD OF THE INVENTION

This invention relates to an air fryer having a camera assembly.

### BACKGROUND OF THE INVENTION

There is growing demand for smart kitchen appliances capable of delivering food prepared according to the user's preference. Benefits of such smart kitchen appliances include greater user convenience, better taste and nutritional value of the food prepared using such kitchen appliances, and minimizing or avoidance of harmful substances being generated in a cooking process using such kitchen appliances.

Including a camera in a kitchen appliance can play an important role in smart assisted food preparation, e.g. cooking. For example, a food type can be recognized by food image recognition and a cooking setting can be determined based on food image analysis results.

Other applications of cameras in kitchen appliances include capturing images and/or video for identification of food amount, food distribution within a food preparation, e.g. cooking, chamber, and doneness level.

Food images can be used for cooking process control, browning control, remote monitoring, burning prevention, and content for social media sharing.

Due to the above-mentioned benefits, camera-integrated kitchen appliances have recently been introduced onto the market. However, various challenges remain in terms of incorporating cameras into certain types of cooking appliance, and in particular air fryers.

Air fryers can be distinguished from, for example, convection ovens at least partly by the direction of gas circulation through the cooking chamber. The air fryer's cooking chamber has, when orientated for use, a top and a bottom. A circulation system, e.g. in the form of a fan driven by a motor, is arranged to circulate said gas upwardly through food received in the cooking chamber in the direction of the top and/or downwardly through food received in the cooking chamber in the direction of the bottom.

By, for instance, mounting the air fryer's heating element proximal to the top of cooking chamber, gas having passed upwardly through the food can be reheated by the heating element before being passed around a duct and being introduced back into the food at the bottom.

Whilst such an arrangement has various advantages, particularly in terms of the frying effect which can be achieved with no or only a relatively small amount of cooking oil being required, it can present difficulties in terms of incorporating a camera into the design.

In particular, direct exposure of the camera assembly to radiation from the heating element may necessitate a relatively elaborate and costly design for mounting the camera. For example, multiple glass layers between the cooking chamber and the camera's image sensor may be required for heat insulation purposes and/or an elaborate cooling system dedicated to provide cooling to the image sensor comprising both an air intake fan and an air exhaust fan may be needed.

Such multiple glass layers can provide a target for reflection and result in less light being transmitted through the window, and so including them to assist with heat insulation can risk compromising image quality.

### SUMMARY OF THE INVENTION

The invention is defined by the claims.

According to examples in accordance with an aspect of the invention, there is provided an air fryer comprising: a cooking chamber; a heating element; a circulation system arranged to circulate gas heated by the heating element in the cooking chamber; and a camera assembly comprising an image sensor, the camera assembly being arranged such that a field of view of the camera assembly permits imaging inside the cooking chamber, wherein the heating element is arranged outside said field of view.

Arranging the heating element out of the camera assembly's field of view can assist with managing heating of the camera assembly by the heating element, thereby facilitating imaging, e.g. so as to improve the quality of the image(s) captured, by the image sensor.

It is noted that the term "field of view" means the maximum area that the camera assembly is able to image.

In other words, the "field of view" refers to the largest scene inside the cooking chamber that the camera assembly is able to view in order to image the scene.

In some embodiments, a window between the inside of the cooking chamber and the image sensor, through which window the inside of the cooking chamber is imaged by the image sensor, is arranged so as to avoid radiation, e.g. infrared radiation, emitted by the heating element from being directly incident on the window.

Avoiding direct incidence of the radiation, e.g. infrared radiation, emitted by the heating element on the window means that the radiation, e.g. infrared radiation, emitted by the heating element cannot reach the window by travelling in a straight line from the heating element to reach the window.

In other words, the window is arranged out of sight of the heating element.

By avoiding direct incidence of the radiation, e.g. infrared radiation, emitted by the heating element on the window in this manner, heating of the camera assembly by the heating element can be more effectively managed, thereby facilitating imaging, e.g. so as to improve the quality of the image(s) captured, by the image sensor.

It is noted that while the heating element may emit infrared radiation, emission of infrared radiation may not constitute the main function of the heating element. This is because radiative heating of food in the cooking chamber by the heating element may correspond to only around 10% of the heating of the food, with convection being the more important heat transfer mechanism.

In at least some embodiments, the window is formed of a suitable optically transmissive and thermally robust material.

The window may be made of glass.

Such a window, e.g. a glass window, arranged between the inside of the cooking chamber and the image sensor may protect the image sensor from the conditions, and in particular the circulating gas heated by the heating element, inside the cooking chamber.

The circulating gas may comprise air, smoke and/or steam. The steam may be released from the food and/or introduced into the cooking chamber from a steam supply also included in the air fryer.

A seal around the above-mentioned glass window may restrict passage of the circulating gas around the window to access the image sensor.

Arranging the heating element outside the camera assembly's field of view, e.g. while avoiding direct incidence of the radiation, e.g. infrared radiation, on the window, may mean that such a window can be made thinner and/or with fewer layers than a scenario in which, for example, the heating element is arranged within the camera assembly's field of view. Such a thinner window and/or a window having fewer layers may assist to reduce reflection of light and/or attenuation of light passing through the window. Accordingly, the arrangement of the window in this way can assist to facilitate imaging, e.g. so as to improve the quality of the image captured, by the image sensor.

In some embodiments, the window is formed of a single glass layer.

Such a single glass layer may mean that less light is reflected by the window, with concomitant improvement in image quality.

Alternatively or additionally, the window may be a glass window having a thickness less than or equal to 3.5 mm.

In some embodiments, the window is a glass window, e.g. a single glass layer window, having a thickness between 1 mm and 3.5 mm.

For example, such a glass window, e.g. a single glass layer window, has a thickness of about 2 mm.

Arrangement of the window so as to avoid that the radiation, e.g. infrared radiation, emitted by the heating element is directly incident on the window can be implemented in any suitable manner, such as via the relative arrangement of the window and the heating element and/or via the positioning of one or more components of the air fryer between the window and the heating element such that the radiation, e.g. infrared radiation, emitted by the heating element cannot travel in a straight line from the heating element to reach the window.

In some embodiments, a heat shield is arranged between the heating element and the window such that the radiation, e.g. infrared radiation, emitted by the heating element is blocked by the heat shield from being directly incident on the window.

This may provide a relatively simple way of avoiding direct incidence of the radiation, e.g. infrared radiation, emitted by the heating element on the window. Moreover, since such a heat shield may be formed of a material, e.g. a metal and/or a metal alloy, that assists to retain heat within the cooking chamber, arrangement of the heat shield between the window and the heating element may provide particularly effective thermal protection for the window.

In some embodiments, the heat shield is, as an alternative or in addition to being arranged between heating element and the window, arranged between the heating element and the image sensor of the camera assembly.

In some embodiments, the window slants across a corner of the cooking chamber. Arrangement of the window across the corner of the cooking chamber may facilitate arrangement of the heating element outside the camera assembly's field of view. Moreover, such a slanted, in other words inclined, orientation of the window, and in some embodiments the camera assembly as a whole, across the corner of the cooking chamber may provide a compact design providing a favorable viewing angle for imaging the inside of the cooking chamber.

The corner across which the window slants may be a top corner of the cooking chamber when the air fryer is orientated for use.

In some embodiments, a light sensitive surface of the image sensor may be arranged parallel to a plane of the window, e.g. so as to slant across the corner of the cooking chamber.

Slanting of the light sensitive surface of the image sensor across the corner of the cooking chamber may assist to facilitate the above-described combination of compact design with favorable viewing angle.

In some embodiments, the camera assembly comprises at least one light emitter arranged to illuminate the inside of the cooking chamber through the window. The at least one light emitter may thus be integrated into the camera assembly.

In such embodiments, the arrangement of the heating element outside the camera assembly's field of view, for example while avoiding the radiation, e.g. infrared radiation, emitted by the heating element being directly incident on the window may assist, e.g. in combination with other thermal management measures described herein, in thermal management of the light emitter(s).

In some embodiments, the at least one light emitter is or are arranged in a ring around the image sensor. It is noted that the term "ring" in this context is not limited to a circular arrangement of the at least one light emitter around the image sensor, and other shapes surrounding the image sensor can be contemplated, such as triangular, rectangular and square arrangements of the at least one light emitter.

The light ring provided by such an arrangement of light emitter(s) may provide effective illumination of food received in the cooking chamber.

In some embodiments, the air fryer comprises an inner housing that delimits the cooking chamber, and an outer housing in which the inner housing is arranged.

In such embodiments, an air cooling channel in fluid communication with ambient air, in other words the atmosphere external to the air fryer, may be provided between the inner housing and the outer housing. The air cooling channel may assist to minimise heat transfer to electronic components included in the air fryer external to the cooking chamber.

In some embodiments, the air cooling channel is at least partly defined between a surface of the inner housing and a lower surface of a cooling air cover provided between the inner housing and the outer housing.

At least part of the camera assembly may be mounted in the air cooling channel. In this way, the air cooling channel may additionally function to provide cooling to the camera assembly.

In some embodiments, the air fryer comprises a fan arranged to circulate air in the air cooling channel. This may assist to enhance air cooling.

The outer housing may delimit at least one air inlet for admitting ambient air.

In some embodiments, the camera assembly comprises a camera assembly housing in which a cooling zone is defined to provide air cooling to the image sensor.

The camera assembly housing may facilitate mounting of the image sensor in the air fryer, since the image sensor may be mounted in the camera assembly housing prior to the camera assembly housing, with the image sensor mounted therein, being itself mounted in the air fryer.

The cooling zone may be in fluid communication with the air cooling channel. Thus, the cooling zone may be assisted to provide cooling to and/or remove heat from the image sensor by the main air cooling channel of the air fryer.

For example, the fan arranged to circulate air in the air cooling channel may additionally assist with providing cooling ambient air to and/or removing warm air from the image sensor due to the cooling zone being in fluid communication with the air cooling channel.

In some embodiments, the cooling zone comprises an air outlet channel for venting air from the air cooling zone.

The air outlet channel may be arranged to expel air into the air cooling channel. Thus, the air cooling channel may assist to remove warm air from the air outlet channel of the camera assembly housing's cooling zone.

In some embodiments, the cooling zone comprises, for example in addition to the air outlet channel, an air inlet channel for admitting air into the air cooling zone.

When the cooling zone comprises, or is defined by, both the air outlet channel and the air inlet channel, air may be circulated through the camera assembly housing by being admitted into and passing along the air inlet channel, and passing along and out of the air outlet channel.

In some embodiments, the outer housing and the camera assembly housing cooperate such that the air inlet channel fluidly communicates with one or more of said at least one air inlet. In this manner, ambient air may be used in the cooling zone to cool the image sensor.

The camera assembly may comprise a camera assembly fan, e.g. a single camera assembly fan, mounted at the camera assembly housing and arranged to circulate air in the cooling zone. The camera assembly fan may assist to draw air, e.g. ambient air, into the cooling zone and/or expel warm air from the cooling zone.

The camera assembly fan may, for instance, be mounted at the air inlet channel, for example by being clamped between the camera assembly housing and the outer housing. In other examples, the camera assembly fan may be mounted at the air outlet channel.

In at least some embodiments, the cooking chamber has, when orientated for use, a top and a bottom, the circulation system being arranged to circulate said gas upwardly through food received in the cooking chamber in the direction of the top and/or downwardly through food received in the cooking chamber in the direction of the bottom.

In such embodiments, the heating element may be arranged proximal to the top of the cooking chamber.

These and other aspects will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts an air fryer according to an example;
FIG. 2 shows part of an interior of an air fryer according to another example;
FIG. 3 provides an exploded view of a camera assembly according to an example;
FIGs. 4A and 4B provide views of a camera assembly housing of the camera assembly shown in FIG. 3; and
FIG. 5 provides an exploded view of components of the air fryer partially shown in FIG. 2.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is an air fryer comprising a cooking chamber, a heating element, and a circulation system arranged to circulate gas heated by the heating element in the cooking chamber. The air fryer further comprises a camera assembly comprising an image sensor for imaging inside the cooking chamber through a window between the inside of the cooking chamber and the image sensor. The camera assembly has a field of view that enables imaging inside the cooking chamber. The heating element is arranged outside said field of view. Alternatively or additionally, the window can be arranged so as to avoid infrared radiation emitted by the heating element being directly incident on the window.

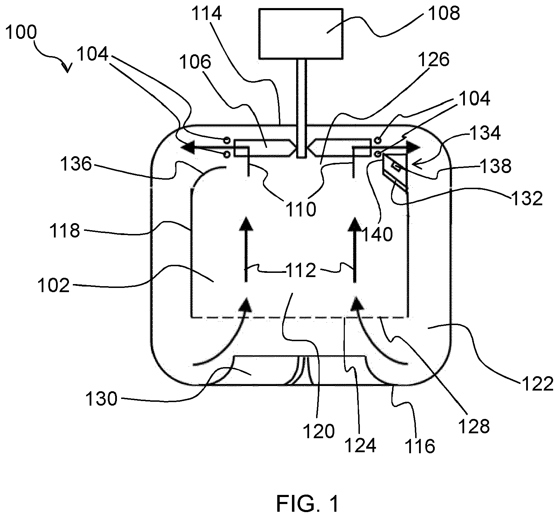

FIG. 1 shows an air fryer 100 according to an example. The air fryer 100 comprises a cooking chamber 102, a heating element 104 configured to emit radiation, e.g. infrared radiation, and a circulation system 106, 108 arranged to circulate gas heated by the heating element 104 in the cooking chamber 102.

In at least some embodiments, such as that shown in FIG. 1, the circulation system 106, 108 comprises, or takes the form of, a gas circulation fan 106 driven by a motor 108.

Any suitable type of heating element 104 may be employed in the air fryer 100 provided that the heating element 104 is capable of emiting radiation, e.g. infrared radiation, and thereby radiatively heating the gas circulating in the cooking chamber 102. The heating element 104 may, for example, comprise a resistive heating element, e.g. a spiral heating element 104. Such a spiral heating element 104 is shown in the example depicted in FIG. 1, with the pair of spatially separated circles on each side of the gas circulation fan 106 representing the cross-section of the spiral heating element 104.

In the case of a spiral heating element 104, the circulating gas may pass through space(s) between coils of the heating element 104, as schematically represented by the arrows 110 in FIG. 1.

In more general terms, the heating element 104 may be arranged to permit the gas circulating in the cooking chamber 102 to pass it, for example to pass through it, thereby to transfer heat from the heating element 104 to the circulating gas.

In some embodiments, the heating element 104 is arranged to radiatively heat the food (not visible) received in the cooking chamber 102 directly, in particular by the infrared radiation emitted by the heating element 104 being directly incident on the food.

It is nonetheless noted that convection may represent the main mechanism by which the food is heated.

The gas circulation fan 106 may be configured to draw air from at least one axial direction and to eject the air radially. FIG. 1 provides, referring again to the arrows 110, a schematic depiction of such a gas circulation fan 106 configuration.

The arrows 110 and the arrows 112 shown in FIG. 1 represent the direction of gas circulation through the cooking chamber 102 in this particular non-limiting example. When orientated for use, as shown in FIG. 1, the cooking chamber 102 has a top 114 and a bottom 116, and the circulation system 106, 108 is arranged to circulate the gas upwardly through food received in the cooking chamber 102 in the direction of the top 114 of the cooking chamber 102.

Alternatively or additionally, the circulation system 106, 108 is arranged to circulate the gas downwardly through the food received in the cooking chamber 102 in the direction of the bottom 116 of the cooking chamber 102.

In some embodiments, such as that shown in FIG. 1, the cooking chamber 102 is partitioned by a wall 118 separating a food receiving space 120 of the cooking chamber 102 from a duct 122.

In such embodiments, gas from the duct 122 may be circulated into the food receiving space 120 via a first opening 124 and may exit the food receiving space 120 and reenter the duct 122 via a second opening 126 opposing the first opening 124 across the food receiving space 120.

In the particular embodiment shown in FIG. 1, the first opening 124 is proximal to the bottom 116 of the cooking chamber 102, and the second opening 126 is proximal to the top 114 of the cooking chamber 102 such that the gas is circulated through the food received in the food receiving space 120 in the direction of the top 114 of the cooking chamber 102, as previously described.

In such embodiments, the first opening 124 may be defined by apertures of a perforate food supporting portion 128. The perforate food supporting portion 128 may be a platform on which food for cooking/baking/frying/steaming may be placed.

In some embodiments, the air fryer 100 comprises a basket whose bottom portion corresponds to the perforate food supporting portion 128.

In embodiments (not shown) in which the gas is circulated downwardly through the food received in the food receiving space 120, the first opening through which gas passes from the duct 122 into the food receiving space 120 is instead proximal to the top 114 of the cooking chamber 102, with the second opening through which gas exits the food receiving space 120 and reenters the duct 122 being proximal to the bottom 116 of the cooking chamber 102.

In some embodiments, the heating element 104 is arranged proximal to the top 114 of the cooking chamber 102.

Alternatively or additionally, the gas circulation fan 106 of the circulation system 106, 108 may be arranged proximal to the top 114 of the cooking chamber 102.

The heating element 104 and/or the gas circulation fan 106 of the circulation system 106, 108 may be arranged in the duct 122.

In the context of the embodiment depicted in FIG. 1, the heating element 104 being arranged proximal to the top 114 of the cooking chamber 102 may mean that the heating element 104 immediately reheats gas exiting the food receiving space 120 via the second opening 126.

Moreover, the positioning of the gas circulation fan 106 and the heating element 104 proximal to the top 114 of the cooking chamber 102 in the non-limiting example shown in FIG. 1 may mean that the gas circulation fan 106 draws the gas out of the food receiving space 120 and directs the gas past, e.g. through the space(s) between coils of the heating element 104 to reheat the gas, and through the duct 122 towards the first opening 124, whereupon the reheated gas reenters the food receiving space 120.

In some embodiments, such as that shown in FIG. 1, the air fryer 100 comprises an air guide member 130 in the duct 122. The air guide member 130 may assist to guide air from the duct 122 into the food receiving space 120 via the first opening 124.

The air guide member 130 may be mounted in the duct 122 opposite the first opening 124, as shown in FIG. 1.

Any suitable design may be contemplated for the air guide member 130. The air guide member 130 may, for example, comprise a so-called star-fish shape. The star-fish shape comprises a plurality of radial fins which are shaped to guide air in the duct 122 towards and through the first opening 124.

In some embodiments, such as that shown in FIG. 1, the heating element 104 and the gas circulation fan 106 are arranged in the duct 122. Positioning of one or both of the heating element 104 and the gas circulation fan 106 in the food receiving space 120 can also be contemplated, subject to the heating element 104 being arranged outside a camera assembly's 134 field of view, e.g. while, in some embodiments, avoiding the infrared radiation emitted by the heating element 104 being directly incident on a window 132 of the camera assembly 134, as will be described in more detail herein below.

Whilst not visible in FIG. 1, the cooking chamber 102 may be openable, for example by a lid (not shown), e.g. a hinging lid, in order that food and/or a food support, e.g. the above-mentioned basket, may be placed into and removed from the cooking chamber 102. In other examples, the cooking chamber 102 may be openable by at least a portion of the cooking chamber 102 being included in a drawer which can be displaced, e.g. slid, from the remainder of the air fryer 100 in order to permit access to the cooking chamber 102.

In some embodiments, such as that shown in FIG. 1, the air fryer 100 comprises a heat shield 136, which heat shield 136 can also be termed a "heat reflector".

The heat shield 136 may assist to retain heat within the cooking chamber 102. In the embodiment shown in FIG. 1, the heat shield 136 assists to retain heat within the food receiving space 120 of the cooking chamber 102.

The heat shield 136 may further assist to minimise heat transfer to electronic components (not visible) included in the air fryer 100 external to the cooking chamber 102.

The heat shield 136 may be formed from any suitable material, such as a metal or metal alloy, e.g. steel. The heat shield 136 is preferably formed from galvanized plate metal.

More generally, the camera assembly 134 included in the air fryer 100 comprises an image sensor 138 for imaging inside the cooking chamber 102.

Imaging the inside of the cooking chamber 102 may enable identification of a food type, amount, distribution and/or doneness level of the food received in the cooking chamber 102, e.g. in the food receiving space 120 of the cooking chamber 102.

Such identification may be implemented via image analysis performed by a processing system included in the air fryer 100 and/or in a processing system included in a cloud-based server and/or in an external user device, such as a smartphone or tablet computer, separate from the air fryer 100.

Any suitable type of image sensor 138 may be contemplated, for example a charge coupled device (CCD) image sensor 138 or a complementary metal-oxide-semiconductor (CMOS) image sensor 138.

In at least some embodiments, the window 132 is formed of a suitable optically transmissive/transparent and thermally robust material.

The window 132 may be made of glass.

Such a window 132, e.g. a glass window 132, arranged between the inside of the cooking chamber 102 and the image sensor 138 may protect the image sensor 138 from the conditions, and in particular the circulating gas heated by the heating element 104, inside the cooking chamber 102.

The circulating gas may comprise air, smoke and/or steam. The steam may be released from the food and/or introduced into the cooking chamber 102 from a steam supply (not visible) also included in the air fryer 100.

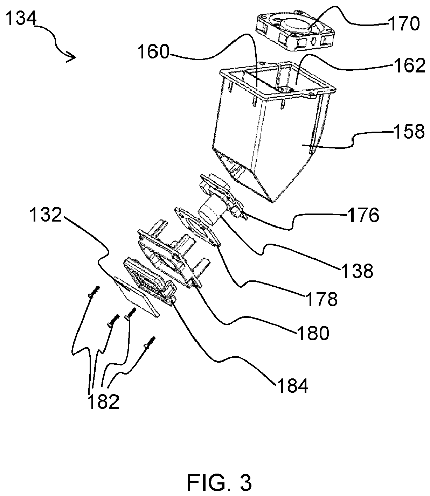

A seal around the above-mentioned glass window 132 may restrict passage of the circulating gas around the window 132 to access the image sensor 138. An example of this is explained herein below with reference to FIG. 3.

The camera assembly 134 has a field of view that captures the inside the cooking chamber 102. As shown in FIG. 1, the heating element 104 is arranged outside the field of view.

Arranging the heating element 104 out of the camera assembly's 134 field of view can assist with managing heating of the camera assembly 134 by the heating element 104, thereby facilitating imaging, e.g. so as to improve the quality of the image(s) captured, by the image sensor 138.

Alternatively or additionally, the window 132 may be arranged so as to avoid the radiation, e.g. infrared radiation, emitted by the heating element 104 being directly incident on the window 132.

Avoiding direct incidence of the radiation, e.g. infrared radiation, emitted by the heating element 104 on the window 132 means that the radiation, e.g. infrared radiation, emitted by the heating element 104 cannot reach the window 132 by travelling in a straight line from the heating element 104 to reach the window 132.

In other words, the window 132 is arranged out of sight of the heating element 104.

By avoiding direct incidence of the radiation, e.g. infrared radiation, emitted by the heating element 104 on the window 132 in this manner, heating of the camera assembly 134 by the heating element 104 can be more effectively managed, thereby facilitating imaging, e.g. so as to improve the quality of the image(s) captured, by the image sensor 138.

In embodiments in which the window 132 includes an optically transmissive material, such as glass, the window 132 can be made thinner and/or with fewer layers than the scenario in which, for example, the infrared radiation emitted by the heating element 104 is directly incident on the window 132. Such a thinner window 132 and/or a window 132 having fewer layers may assist to reduce reflection of light and/or attenuation of light passing through the window 132. Accordingly, the arrangement of the window 132 in this way can assist to facilitate imaging, e.g. so as to improve the quality of the image captured, by the image sensor 138.

In some embodiments, the window 132 is formed of a single glass layer.

Such a single glass layer may mean that less light is reflected by the window, with concomitant improvement in image quality.

Alternatively or additionally, the window 132 may be a glass window 132 having a thickness less than or equal to 3.5 mm.

In some embodiments, the window 132 is a glass window 132, e.g. a single glass layer window 132, having a thickness between 1 mm and 3.5 mm.

For example, such a glass window 132, e.g. a single glass layer window 132, has a thickness of about 2 mm.

Arrangement of the window 132 so as to avoid that the infrared radiation emitted by the heating element 104 is directly incident on the window 132 can be implemented in any suitable manner, such as via the relative arrangement of the window 132 and the heating element 104 and/or via the positioning of one or more components of the air fryer 100 between the window 132 and the heating element 104 such that the infrared radiation emitted by the heating element 104 cannot travel in a straight line from the heating element 104 to reach the window 132.

In some embodiments, such as that shown in FIG. 1, the heat shield 136 is arranged between the heating element 104 and the window 132 such that the infrared radiation emitted by the heating element 104 is blocked by the heat shield 136 from being directly incident on the window 132.

This may provide a relatively simple way of avoiding direct incidence of the infrared radiation emitted by the heating element 104 on the window 132. Moreover, since the heat shield 136 is formed of a material, e.g. a metal and/or a metal alloy, that assists to retain heat within the cooking chamber 102, e.g. within the food receiving space 120 of the cooking chamber 102, arrangement of the heat shield 136 between the window 132 and the heating element 104 may provide particularly effective thermal protection for the window 132.

Referring to FIG. 1, a portion 140 of the heat shield 136 is arranged between the heating element 104 and the window 132 such that the infrared radiation emitted by the heating element 104 is blocked by the portion 140 from being directly incident on the window 132.

In some embodiments, the heat shield 136 is, as an alternative or in addition to being arranged between heating element 104 and the window 132, arranged between the heating element 104 and the image sensor 138 of the camera assembly 134.

Referring again to FIG. 1, the portion 140 of the heat shield 136 is arranged between the heating element 104 and the image sensor 138, such that the portion 140 shields the image sensor 138 from the infrared radiation emitted by the heating element 104.

In some embodiments, such as that shown in FIG. 1, the window 132 slants across a corner of the cooking chamber 102. Arrangement of the window 132 across the corner of the cooking chamber 102 may facilitate arrangement of the heating element 104 outside the camera assembly's 134 field of view. Moreover, such a slanted, in other words inclined, orientation of the window 132, and in some embodiments the camera assembly 134 as a whole, across the corner of the cooking chamber 102 may provide a compact design providing a favorable viewing angle for imaging the inside of the cooking chamber 102, and in particular the food receiving space 120, e.g. the above-mentioned basket, of the cooking chamber 102.

As shown in FIG. 1, the corner across which the window 132 slants in this non-limiting example is a top corner of the cooking chamber 102 when the air fryer 100 is orientated for use.

In some embodiments, a light sensitive surface of the image sensor 138 may be arranged parallel to a plane of the window 132, e.g. so as to slant across the corner of the cooking chamber 102.

Slanting of the light sensitive surface of the image sensor 138 across the corner of the cooking chamber 102 may assist to facilitate the above-described combination of compact design and favorable viewing angle.

In some embodiments, and whilst not visible in FIG. 1, the camera assembly 134 comprises at least one light emitter arranged to illuminate the inside of the cooking chamber 102, and in particular the food receiving space 120 in the non-limiting example shown in FIG. 1, through the window 132.

Any suitable type of light emitter can be contemplated.

In at least some embodiments, the at least one light emitter comprises one or more light emitting diodes.

In such embodiments, the camera assembly 134 may include driver circuitry configured to control the one or more light emitting diodes included in, or defining, the at least one light emitter.

In such embodiments, arrangement of the heating element 104 outside the camera assembly's 134 field of view, for example while avoiding the radiation, e.g. infrared radiation, emitted by the heating element 104 being directly incident on the window 132, for instance in combination with other thermal management measures described herein, may assist in thermal management of the light emitter(s), e.g. the light emitting diode(s).

In some embodiments, the at least one light emitter, e.g. one or more light emitting diodes, is or are arranged in a ring around the image sensor 138.

The light ring provided by such an arrangement of light emitter(s) may provide effective illumination of food received in the cooking chamber 102, and in particular food received in the food receiving space 120 in the non-limiting example shown in FIG. 1. An example of a ring arrangement of light emitter(s) will be described herein below with reference to FIG. 3.

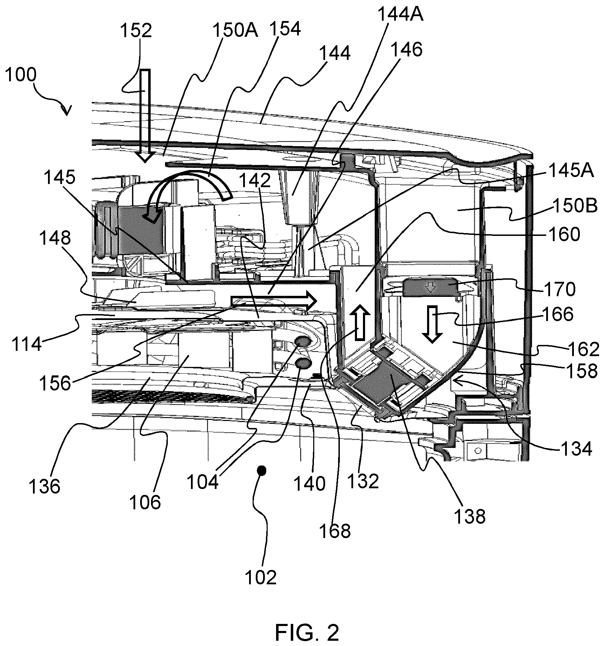

FIG. 2 shows part of an interior of an air fryer 100 according to another example. Evident in FIG. 2 is the heating element 104 and the window 132 of the camera assembly 134. The window 132, in this case a glass window 132, is arranged to avoid that infrared radiation emitted by the heating element 104 is directly incident on the window 132, in particular by the portion 140 of the heat shield 136 being arranged to block the infrared radiation from reaching the window 132, as previously described in relation to FIG. 1.

In some embodiments, such as that shown in FIG. 2, the air fryer 100 comprises an inner housing 142 that delimits the cooking chamber 102, and an outer housing 144 in which the inner housing 142 is arranged.

In such embodiments, an air cooling channel 146 in fluid communication with ambient air, in other words the atmosphere external to the air fryer 100, may be provided between the inner housing 142 and the outer housing 144. The air cooling channel 146 may assist to minimise heat transfer to electronic components (not visible) included in the air fryer 100 external to the cooking chamber 102.

In some embodiments, such as that shown in FIG. 2, the air cooling channel 146 is at least partly defined between an upper surface of the inner housing 142 and a lower surface of a cooling air cover 145 provided between the inner housing 142 and the outer housing 144.

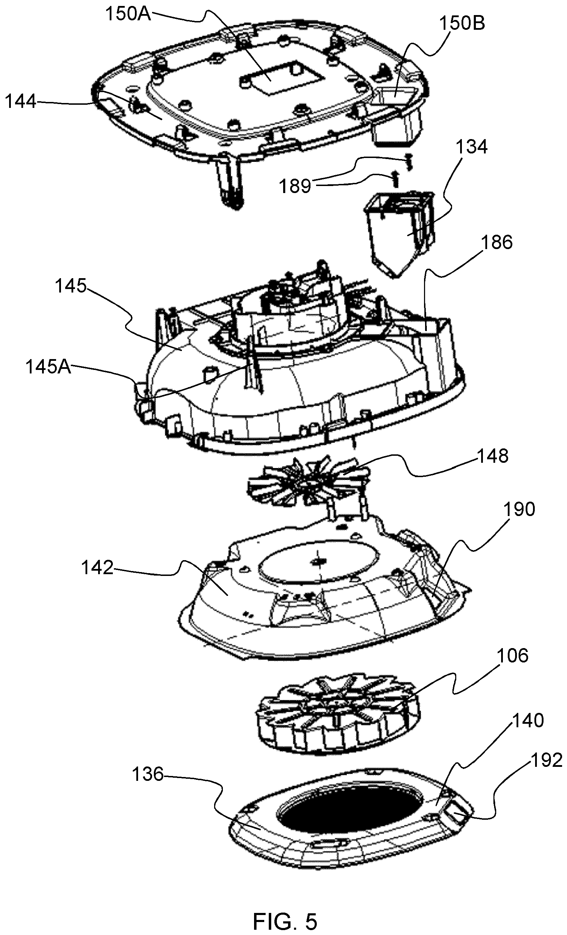

Referring to FIGs. 2 and 5, one or more mounting members 145A protruding from an upper surface of the cooling air cover 145 may assist to support the outer housing 144, in this non-limiting example by each support member 144A protruding from a lower surface of the outer housing 144 abutting, and thus being supported by, one of the mounting members 145A.

In some embodiments, such as that shown in FIG. 2, the heating element 104 is arranged proximal to the top 114 of the cooking chamber 102, and at least part of the air cooling channel 146 is arranged between the top 114 of the cooking chamber 102 and part of the outer housing 144 proximal to the top 114 of the cooking chamber 102.

Thus, the air cooling channel 146 may be arranged to hinder heat transfer from the heating element 104 to electronic components included in the air fryer 100 above the cooking chamber 102.

In some embodiments, such as that shown in FIG. 2, the air fryer 100 comprises a further fan 148 arranged to circulate air in the air cooling channel 146. This may assist to enhance air cooling.

Rotation of the further fan 148 may be via a motor, as explained above in relation to the gas circulation fan 106 of the circulation system 106, 108.

The outer housing 144 may delimit at least one air inlet 150A, 150B for admitting ambient air.

In some embodiments, air inlets 150A, 150B are provided in both the top and the bottom (not visible) of the outer housing 144 of air fryer 100.

Ambient air may thus enter the air fryer 100 via the air inlet 150A, as represented by the arrow 152 in FIG. 2. The ambient air may pass into the air cooling channel 146, for example may be drawn into the air cooling channel 146 by the further fan 148, as represented by the arrow 154.

In some embodiments, such as that shown in FIG. 2, at least part of the camera assembly 134 is mounted in the air cooling channel 146. In this way, the air cooling channel 146 may additionally function to provide cooling to the camera assembly 134.

In embodiments in which the further fan 148 is included in the air fryer 100, the further fan 148 may be arranged to draw ambient air into the air cooling channel 146 and direct the ambient air towards the camera assembly 134, as represented in FIG. 2 by the arrow 156.

In some embodiments, and as best shown in FIGs. 2, 3, 4A and 4B, the camera assembly 134 comprises a camera assembly housing 158 in which a cooling zone 160, 162 is defined to provide air cooling to the image sensor 138.

The camera assembly housing 158 may facilitate mounting of the image sensor 138 in the air fryer 100, since the image sensor 138 may be mounted in the camera assembly housing 158 prior to the camera assembly housing 158, with the image sensor 138 mounted therein, being itself mounted in the air fryer 100.

By mounting the camera assembly housing 158 in the air cooling channel 146, the outside of the camera assembly housing 158 may be exposed to the air fryer's 100 cooling air.

The cooling zone 160, 162 may be in fluid communication with the air cooling channel 146. Thus, the cooling zone 160, 162 may be assisted to provide cooling to and/or remove heat from the image sensor 138 by the main air cooling channel 146 of the air fryer 100.

For example, the further fan 148 arranged to circulate air in the air cooling channel 146 may additionally assist with providing cooling ambient air to and/or removing warm air from the image sensor 138 due to the cooling zone 160, 162 being in fluid communication with the air cooling channel 146.

In some embodiments, such as that shown in FIGs. 2, 3, 4A and 4B, the cooling zone 160, 162 comprises an air outlet channel 160 for venting air from the air cooling zone 160, 162.

In some embodiments, and referring in particular to FIG. 2, the air outlet channel 160 is arranged to expel air into the air cooling channel 146. Thus, the air cooling channel 146 may assist to remove warm air from the air outlet channel 160 of the camera assembly housing's 158 cooling zone 160, 162.

In some embodiments, and still referring to FIG. 2, the cooling zone 160, 162 comprises, an air inlet channel 162 for admitting air into the air cooling zone 160, 162.

When the cooling zone 160, 162 comprises, or is defined by, both the air outlet channel 160 and the air inlet channel 162, air may be circulated through the camera assembly housing 158 by being admitted into and passing along the air inlet channel 162, as represented in FIG. 2 by the arrow 166, and passing along and out of the air outlet channel 160, as represented in FIG. 2 by the arrow 168.

In some embodiments, the outer housing 144 and the camera assembly housing 158 cooperate such that the air inlet channel 162 fluidly communicates with one or more of said at least one air inlet 150A, 150B. In this manner, ambient air may be used in the cooling zone 160, 162 to cool the image sensor 138.

In the non-limiting example shown in FIG. 2, the air inlet channel 162 fluidly communicates with, and extends from, the air inlet 150B.

In some embodiments, the camera assembly 134 comprises a camera assembly fan 170 mounted at the camera assembly housing 158 and arranged to circulate air in the cooling zone 160, 162. The camera assembly fan 170 may assist to draw air, e.g. ambient air, into the cooling zone 160, 162 and/or expel warm air from the cooling zone 160, 162.

The camera assembly fan 170 may, for instance, be mounted at the air inlet channel 162, for example by being clamped between the camera assembly housing 158 and the outer housing 144, as shown in FIGs. 2 and 3. In other examples, the camera assembly fan 170 may be mounted at the air outlet channel 160.

The exploded view of the camera assembly 134 provided in FIG. 3 shows mounting of the camera assembly fan 170 at an opening of the air inlet channel 162.

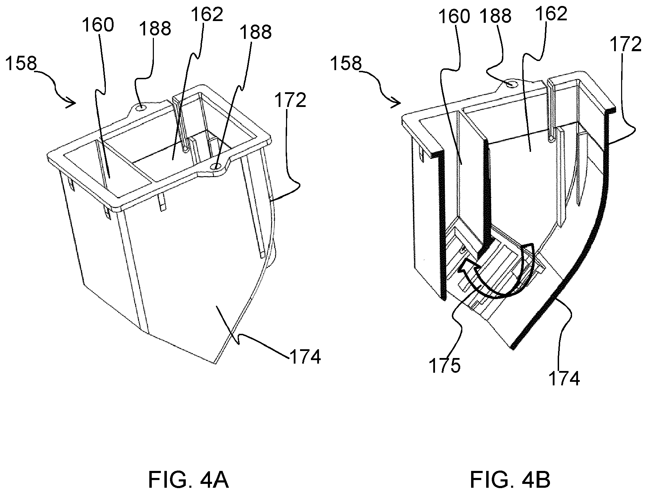

In some embodiments, and as best shown in FIG. 4B, the slanted orientation of the window 132, in this case a glass window 132, is implemented by the camera assembly housing 158 comprising a straight portion 172 configured to extend from the air inlet 150B, which straight portion 172 extends to meet a further portion 174 which extends at an angle with respect to the straight portion 172. The further portion 174 is truncated to define a slanted opening for receiving the glass window 132.

In such embodiments, the opening of the air inlet channel 162 and the exit of the air outlet channel 160 may be provided where the straight portion 172 meets the air inlet 150B. The direction of airflow through the cooling zone 160, 162 is represented in FIG. 4B by the arrow 175.

In this design, ambient air drawn into the camera assembly housing 158 via the air inlet channel 162, is guided along the image sensor 138, deflected at the glass window 132 and pushed through the air outlet channel 160 into the air cooling channel 146. Thus, cooling from inside and outside the camera assembly housing 158 is provided.

The image sensor 138 may be mounted on a printed circuit board 176, and the printed circuit board 176 may be mounted within the camera assembly housing 158, as best shown in FIG. 3.

In the embodiment shown in FIG. 3, the camera assembly 134 comprises at least one light emitter 178, e.g. one or more light emitting diodes, arranged in a ring around the image sensor 138.

The at least one light emitter 178 may be connected, together with the image sensor 138, to the printed circuit board 176.

In some embodiments, the glass window 132 is included in the camera assembly 134. In such embodiments, the glass window 132 may be mounted in a frame 180, which frame 180 is attachable to the camera assembly housing 158, for example via one or more fasteners 182, e.g. screws.

In the non-limiting example shown in FIG. 3, the fasteners 182 are in the form of four plastic screws, e.g. four 2.0 mm x 8 mm plastic screws.

The glass window 132, in other words camera glass, may be sealingly mounted in the frame 180, e.g. via a sealing member 184 arranged between the glass window 132 and the frame 180.

The sealing member 184 may restrict passage of the circulating gas around the window 132, in this case between the window 132 and the frame 180, to access the image sensor 138, as previously described.

The camera assembly housing 158 may be mounted in the air fryer 100 in any suitable manner. Referring to FIGs. 4A, 4B and 5, the camera assembly housing 158 in this non-limiting example is received in a complementarily shaped recessed portion 186 delimited by the cooling air cover 145. In this example, the camera assembly housing 158 includes one or more attachment portions 188, e.g. screw holes, for permitting the camera assembly housing 158 to be, following its insertion into the recessed portion 186, secured to the cooling air cover 145.

Screws 189 for securing the camera housing 158 to the cooling air cover 145 via attachment portions 188 in the form of screw holes are employed in the non-limiting example shown in FIG. 5.

With continued reference to FIG. 5, the inner housing 142 in this example delimits a first opening 190 which aligns with a second opening 192 provided in the heat shield 136. The first opening 190 and the second opening 192 are arranged to align with the glass window 132. In this manner, light from the light emitter(s) 178 can enter and illuminate the cooking chamber 102, and the inside of the cooking chamber 102 can be imaged by the image sensor 138 through the glass window 132, as previously described.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. An air fryer (100) comprising:
a cooking chamber (102);
a heating element (104);
a circulation system (106, 108) arranged to circulate gas heated by the heating element in the cooking chamber; and
a camera assembly (134) comprising an image sensor (138), the camera assembly being arranged such that a field of view of the camera assembly permits imaging inside the cooking chamber, wherein the heating element is arranged outside said field of view.

2. The air fryer (100) according to claim 1, comprising a heat shield (136) arranged between the heating element (104) and a window (132) between the inside of the cooking chamber (102) and the image sensor (138), the heat shield being thereby arranged to block radiation emitted by the heating element from being directly incident on the window.

3. The air fryer (100) according to claim 2, wherein the window (132) slants across a corner of the cooking chamber (102).

4. The air fryer (100) according to any of claims 1 to 3, wherein the camera assembly (134) comprises at least one light emitter (178) arranged to illuminate the inside of the cooking chamber (102); optionally wherein the at least one light emitter is or are arranged in a ring around the image sensor (138).

5. The air fryer (100) according to any of claims 1 to 4, comprising:
an inner housing (142), the inner housing delimiting the cooking chamber (102);
an outer housing (144) in which the inner housing is arranged; and
an air cooling channel (146) in fluid communication with ambient air, the air cooling channel being provided between the inner housing and the outer housing, wherein at least part of the camera assembly (134) is mounted in the air cooling channel.

6. The air fryer (100) according to claim 5, comprising a fan (148) arranged to circulate air in the air cooling channel (146).

7. The air fryer (100) according to claim 5 or claim 6, wherein the outer housing (144) delimits at least one air inlet (150A, 150B) for admitting ambient air.

8. The air fryer (100) according to any of claims 1 to 7, wherein the camera assembly (134) comprises a camera assembly housing (158) in which a cooling zone (160, 162) is defined to provide air cooling to the image sensor (138).

9. The air fryer (100) according to claim 8 when dependent from any of claims 5 to 7, wherein the cooling zone (160, 162) is in fluid communication with said air cooling channel (146).

10. The air fryer (100) according to claim 8 or claim 9, wherein the cooling zone (160, 162) comprises an air outlet channel (160) for venting air from the air cooling zone.

11. The air fryer (100) according to claim 10 when dependent from any of claims 5 to 7 and 9, wherein the air outlet channel (160) is arranged to expel air into the air cooling channel (146).

12. The air fryer (100) according to any of claims 8 to 11, wherein the cooling zone (160, 162) comprises an air inlet channel (162) for admitting air into the air cooling zone.

13. The air fryer (100) according to claim 12 when dependent from claim 7, wherein the outer housing (144) and the camera assembly housing (158) cooperate such that the air inlet channel (162) fluidly communicates with one or more of said at least one air inlet (150A, 150B).

14. The air fryer (100) according to any of claims 8 to 13, wherein the camera assembly (134) comprises a camera assembly fan (170) mounted at the camera assembly housing (158) and arranged to circulate air in the cooling zone (160, 162).

15. The air fryer (100) according to any of claims 1 to 14, wherein the cooking chamber (102) has, when orientated for use, a top (114) and a bottom (116), the circulation system (106, 108) being arranged to circulate said gas upwardly through food received in the cooking chamber in the direction of the top and/or downwardly through food received in the cooking chamber in the direction of the bottom; optionally wherein the heating element (104) is arranged proximal to the top of the cooking chamber.
